# EUROPEAN PATENT APPLICATION

(11) **EP 1 413 188 A1**
(43) Date of publication of application: **28.04.2004**
(21) Application number: 02733373.1
(22) Date of filing: 06.06.2002
(51) Int. Cl.: A01C 11/02

(54) **TRANSPLANTING MACHINE**

(30) Priority: 02.07.2001 JP 2001201344; 22.03.2002 JP 2002081849
(71) Applicant: MINORU SANGYO KABUSHIKI KAISHA, Akaiwa-gun Okayama 709-0892 (JP)
(72) Inventor: HIRAOKA, Nobuaki, Akaiwa-gun, Okayama 709-0892 (JP); OKUDA, Tatsuo, Akaiwa-gun, Okayama 709-0892 (JP); KUBO, Tatsushi, Akaiwa-gun, Okayama 709-0892 (JP)
(74) Representative: Pluckrose, Anthony William
(86) International application number: PCT/JP2002/005634
(87) International publication number: WO 2003/003813

(57) **Abstract**

A transplanting machine, driven by ground-engaging wheels, intended to improve the stability of transplanting operation, wherein a main gear box (33) in the power transmission mechanism (30) of the transplanting machine (10) driven by ground-engaging wheels is provided with a transmission ratio adjusting section (41) and a manual rotation shaft (43), while an input gear box (32) is provided with a main clutch (32a) and an upper right gear box (38) is provided with an auxiliary clutch (38a). The slippage of ground-engaging wheels (12A, 12B) is corrected by the transmission ratio adjusting section (41), and the rotation of the manual rotation shaft (43) makes possible the manual driving of a planting device (14) and seedling transfer devices (15). The power cutting-off of the auxiliary clutch (38a) shifts the phase of each seeding transfer device (15) and disperses the loads on the ground-engaging wheels (12A, 12B), thus securing smooth rotation and stabilizing the transplanting of seedlings.

## Description

### TECHNICAL FIELD

The present invention relates to a transplanting machine. More particularly, the present invention relates to the transplanting machine, to be driven by ground-engaging wheels, for transplanting seedlings with high accuracy and reliability.

### BACKGROUND ART

There are a self-travel type and a tracking type in the transplanting machine for transplanting an agricultural field with seedlings of vegetables such as a Welsh onion, a leek, an onion, a cabbage, a broccoli, green soybeans, a tomato, and the like and flowers such as chrysanthemum. In the self-travel type, a motor is mounted on the body of the transplanting machine. In the tracking type, a body of the transplanting machine is tracked by a tractor. There are two types in the transplanting machine of the tracking type. In one type of the transplanting machine, a seedling planting device of the seeding and a seedling-transfer device are driven by a PTO shaft of the tractor drives, whereas in the other type of the transplanting machine, the seedling-planting device and the seedling-transfer device are driven by the rotation of ground-engaging wheels supporting the body thereof.

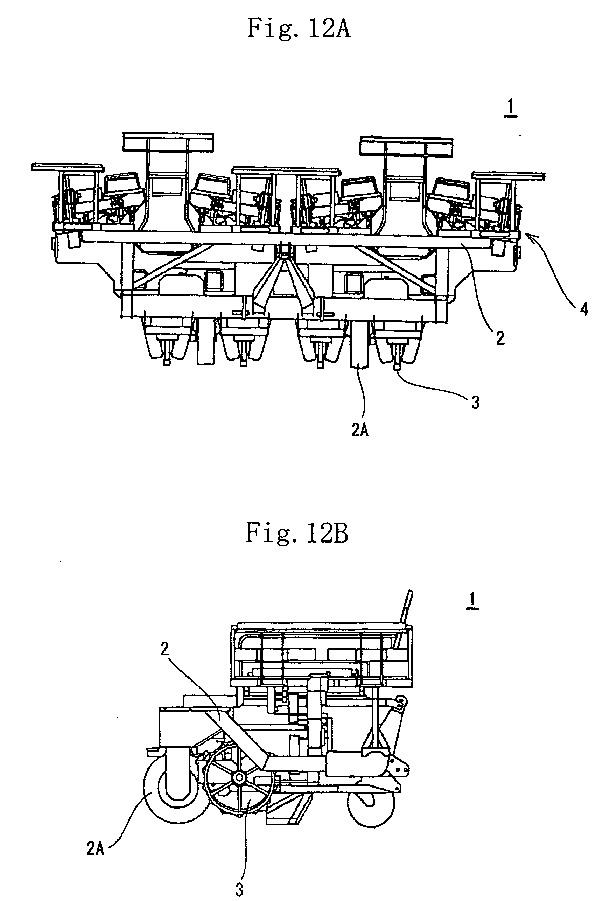

Figs. 12A and 12B show a tracking-type transplanting machine 1 having a conventional construction, to be driven by ground-engaging wheels, disclosed in Japanese Patent Application Laid-Open No. 2001-25310. In the transplanting machine 1, the seedling-planting devices 3 mounted on the body 2 are driven at the fixed speed change ratio by transmitting the power generated by the rotation of the forward ground-engaging wheels 2A supporting the body 2 via the power mechanism for the seedling-planting devices 3. The power generated by the ground-engaging wheels 2A is also transmitted to the seedling supply devices 4 installed on the body 2 via the root-to-root alteration power engine capable of adjusting the speed change ratio. Thereby the seedling supply devices 4 are driven. The speed change ratio of each seedling supply device 4 is altered at one portion of the root-to-root alteration power engine to save labor required to adjust the speed change ratio.

The transplanting machine 1, shown in Figs. 12A and 12B, that is driven by the ground-engaging wheels 12A is not capable of transplanting seedlings unless the ground-engaging wheels rotate. It is not until the transplanting machine passes an end of a ridge in the neighborhood of a region where the tractor takes a U-turn that the transplanting machine is incapable of transplanting the seedlings by the rotation of the ground-engaging wheels. Therefore the end of the ridge cannot be planted with the seedlings. That is, the transplanting machine has a problem that it is incapable of utilizing the area of the field effectively.

Owing to a change of weather, the condition of the surface soil of the field changes from a dry condition to a muddy condition or vice versa. The ground-engaging wheels of the transplanting machine that is tracked by the tractor have slips on the surface soil of the agricultural field. The slip rate is not uniform but varies in dependence on the condition of the surface soil. In the transplanting machine 1 shown in Figs. 12A and 12B, the rotation of the ground-engaging wheels 2A is transmitted to the seedling-planting devices 3 at the fixed ratio. Therefore when the ground-engaging wheels 2A slip, the seedlings tilt. When the ground-engaging wheels 2A slip to a high extent, there is a possibility that the seedlings fall on the soil and cannot be planted.

In transplanting the seedlings in a plurality of rows of the field, the body of the transplanting machine is provided with seedling supply devices 4 corresponding to the number of rows. A torque load for driving the seedling supply device 4 is not uniform but varies in one drive cycle. Thus if the phases in the drive cycles of the seedling supply devices 4 are coincident with one another, the timings at which the torque loads become maximum are coincident with one another. As a result, an excessive load is applied temporarily to the ground-engaging wheels 2A driving the seedling supply devices 4. Consequently the ground-engaging wheels 2A are prevented from smoothly rotating. Thereby the driving situation of the seedling supply devices 4 and that of the planting apparatuses 3 become unstable. Therefore the seedlings cannot be transplanted reliably.

There are various situations in the field in which the seedlings are transplanted by the transplanting machine. Thus when the height of the seedling-planting devices 3 is fixed, the load to be applied to the soil by the seedling-planting devices 3 is not constant because of irregularity of the surface soil. Consequently the seedlings cannot be transplanted reliably in the field.

The surface of a flat soil (unfurrowed soil) and that of a furrowed soil are much different from each other in the height thereof. Thus there is a growing demand for development of means for easily vertically moving the seedling-planting devices 3 upward and downward to adjust the load to be applied to the earth thereby.

The present invention has been made in view of the above-described problem. Therefore it is an obj ect of the present invention to increase the yield by effectively utilizing the area of the agricultural field. It is another object of the present invention to secure a reliable transplanting situation irrespective of the situation of the surface soil of the field even in the case where seedlings are transferred simultaneously in a plurality of rows of the field. It is still another object of the present invention to easily adjust the load to be applied to the soil by transplanting apparatuses of the transplanting machine.

### DISCLOSURE OF THE INVENTION

The present invention provides a transplanting machine for transplanting an agricultural field with seedlings by driving a seedling-planting device and a seedling-transfer device to which a power generated by a rotation of ground-engaging wheels thereof is transmitted via a power transmission mechanism, including:
a transmission ratio adjustment portion provided in a transmission channel, of the power transmission mechanism, for transmitting the power from the ground-engaging wheels to the transplanting apparatus,
wherein the transmission ratio adjustment portion correctively adjusts a slip of the ground-engaging wheels with respect to the field to drive the transplanting apparatus.

As described above, a transmission ratio adjustment portion is provided in the transmission channel, of the power transmission mechanism, for transmitting the power from the ground-engaging wheels to the transplanting apparatus. Thus even though the ground-engaging wheels slip on the surface soil of the field, it is possible to make the speed of the transplanting apparatus relative to the field zero by appropriately adjusting the transmission ratio of the power in correspondence to a slip situation of the ground-engaging wheels. Therefore the transplanting apparatus provides the field with seedlings reliably and makes the postures of the seedlings uniform with high accuracy. It is preferable that the transmission ratio adjustment portion is constructed of a plurality of gears having different number of teeth and that the transmission ratio is adjusted by combining required gears with each other.

The present invention also provides a transplanting machine for transplanting an agricultural field with seedlings by driving a seedling-planting device and a seedling-transfer device to which a power generated by a rotation of ground-engaging wheels thereof is transmitted via a power transmission mechanism, including:
a main clutch, for transmitting and cutting off the power generated by the ground-engaging wheels, installed in a power input portion included in the power transmission mechanism to input the power thereto; and
a manual rotation shaft installed on a power distribution portion, of the power transmission mechanism, for distributing the power to the transplanting apparatus and the seedling-transfer device,
wherein by rotating the manual rotation shaft with the power cut off by the main clutch, the transplanting apparatus and the seedling-transfer device can be driven manually.

The main clutch and the manual rotation shaft are provided. Thus when the ground-engaging wheels are incapable of rotating or when the ground-engaging wheels rotate and yet the seedlings cannot be transplanted because the seedlings have not arrived at the transplanting apparatus when a transplanting work starts, the transplanting apparatus and the seedling-transfer device are driven by rotating the manual rotation shaft irrespective of whether the ground-engaging wheels are rotating. Thereby the seedlings can be supplied to the transplanting apparatus. Therefore the seedlings can be transplanted to an end of a ridge, in the neighborhood of a region, where the tractor takes a U-turn although the conventional transplanting machine to be driven by ground-engaging wheels is incapable of transplanting the seedlings there. Thus the area of the field can be efficiently utilized, which leads to the increase of the yield.

The present invention also provides a transplanting machine for transplanting an agricultural field with seedlings by driving a plurality of seedling-planting devices and seedling-transfer devices, provided on a body of the transplanting machine, to which a power generated by a rotation of ground-engaging wheels thereof is transmitted via a power transmission mechanism, including:
an auxiliary clutch, for transmitting and cutting off the power, installed in each transmission portion included in the power transmission mechanism to transmit the power to each of the seedling-transfer devices,
wherein with any of the auxiliary clutches or all of the auxiliary clutches placed in a cut-off state, a phase of a driving situation of one of the seedling-transfer devices placed in a power cut-off state is so set that the phase shifts from phases of driving situations of others of the seedling-transfer devices, whereby a load to be applied to the ground-engaging wheels is averaged.

The auxiliary clutch is provided in each transmission portion for transmitting the power to the corresponding seedling-transfer device. Thus by placing each auxiliary clutch in the power cut-off state, it is possible to manually drive driving portions of each seedling-transfer device. Thereby it is possible to adjust phases in drive cycles of the seedling-transfer devices. This phase adjustment is performed for each of the seedling-transfer devices to prevent a timing at which a torque load becomes maximum in one drive cycle of one seedling-transfer device from synchronizing a timing at which a torque load becomes maximum in one drive cycle of other seedling-transfer devices. Consequently it is possible to prevent generation of a state in which an excessive load is applied to the ground-engaging wheels owing to the concentration of the maximum loads of all the seedling-transfer devices and secure a smooth rotation of the ground-engaging wheels. Thereby reliable transplanting of the seedlings can be maintained.

The present invention also provides a transplanting machine for transplanting an agricultural field with seedlings by driving a seedling-planting device and a seedling-transfer device to which a power generated by a rotation of ground-engaging wheels thereof is transmitted via a power transmission mechanism,
wherein the transplanting apparatus is lifted via a spring fixed to a leading end of a pivotal lever;
one end of a handle longer than the pivotal lever is fixed to a supporting shaft, fixed to the pivotal lever, serving as a support of a pivotal motion of the pivotal lever; and the other end of the handle is formed as a gripping portion to be operated; and
the leading end of the pivotal lever can be pivoted vertically by performing an operation of vertically tilting the gripping portion of the handle; and the pivotal lever is placed in position by locking the handle to a multi-stage locking means fixed to a body of the transplanting machine.

In this construction, in association with the vertical movement of the gripping portion of the handle, the leading end of the pivotal lever pivots vertically on the supporting shaft. Thus the operator can adjust the vertical position of the transplanting apparatus easily by merely moving the gripping portion via the spring mounted on the leading end of the pivotal lever with the operator holding the gripping portion.

Accordingly the operator can adjust the load of the transplanting apparatus applied to the earth by the transplanting apparatus by operating the handle in dependence on the situation of the surface of the soil, namely, in dependence on the height and degree of irregularity of the surface of the soil on which seedlings are transplanted.

The length of the handle is much larger than that of the pivotal lever. Therefore owing to the principle of the lever having a large ratio of the length of the pivotal lever to that of the handle, it is possible to generate a large load for lifting the transplanting apparatus.

The means for lifting the transplanting apparatus is constructed not of a hydraulic construction or a motor, but of the mechanical construction. Therefore it is possible to manufacture the transplanting machine at a low cost and make it lightweight.

### BRIEF DESCRIPTION OF THE DRAWINGS

Fig. 1 is a perspective view showing a transplanting machine according to a first embodiment of the present invention.
Fig. 2 is a schematic plan view showing the transplanting machine in which a supporting member of a reserve seedling stand is not shown.
Fig. 3 is a side view showing the transplanting machine.
Fig. 4 is a schematic perspective view showing a lifting portion.
Fig. 5A is a schematic perspective view showing a transplanting apparatus.
Fig. 5B is a schematic view showing a seedling-transfer device.
Fig. 6 is a schematic perspective view showing the right half of a power transmission mechanism.
Fig. 7 shows a distribution diagram of the power transmission mechanism.
Fig. 8 is a side view showing a transplanting machine according to a second embodiment of the present invention.
Fig. 9 is an enlarged perspective view showing main parts of the transplanting machine.
Figs. 10A, 10B, and 10C are explanatory views showing a handle operation.
Figs. 11A and 11B show a position adjustment of a pivotal lever with respect to an adjusting plate.
Figs. 12A is a front view showing a conventional transplanting machine.
Fig. 12B is a side view showing the conventional transplanting machine.

### BEST MODE FOR CARRYING OUT THE INVENTION

The transplanting machine according to embodiments of the present invention will be described below with reference to the drawings.

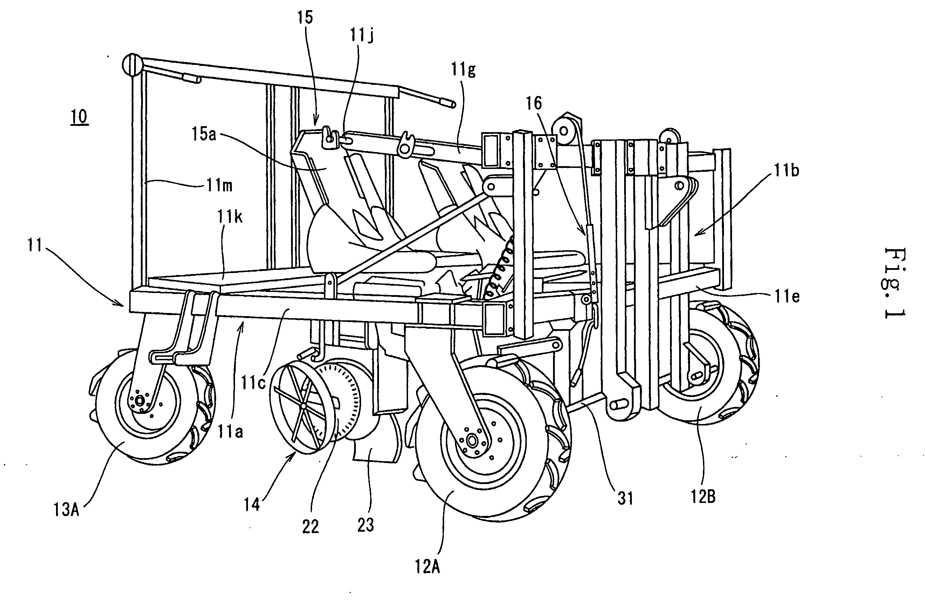

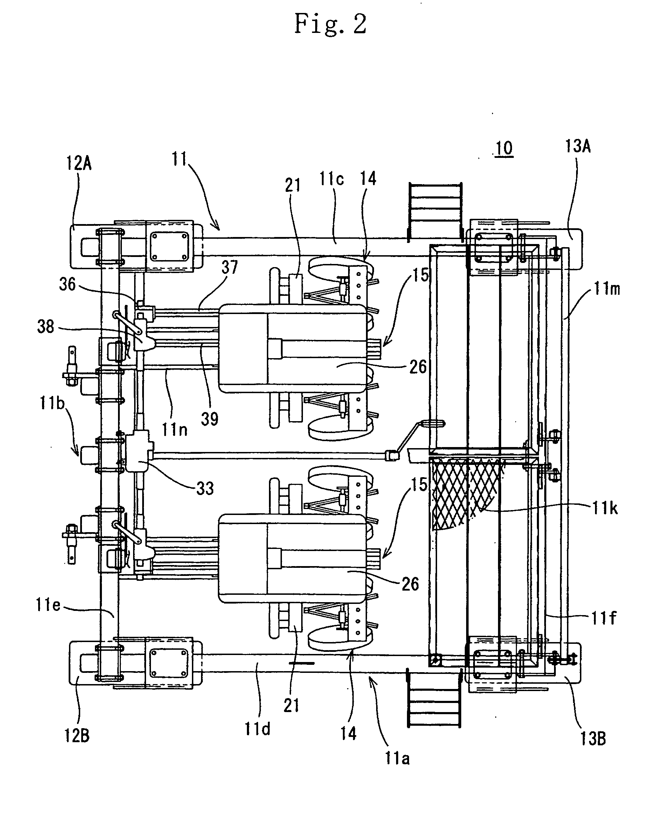

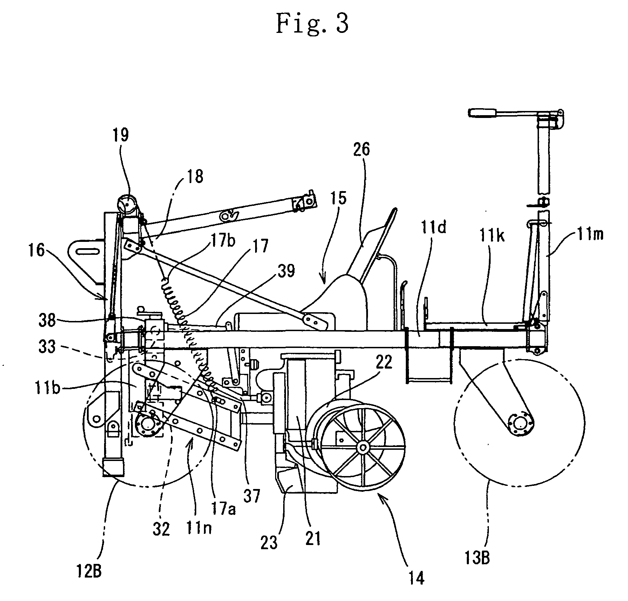

Figs. 1, 2, and 3 show a transplanting machine 10, of a first embodiment, to be tracked by a tractor and driven by ground-engaging wheels thereof. The frame-shaped body 11 is supported by front right and left ground-engaging wheels 12A and 12B and rear right and left wheels 13A and 13B. Two seedling-planting devices 14 each capable of performing a work of transplanting two rows of seedlings-transfer are installed on a lower center of a body 11 with the two the planting devices 14 disposed below the body 11. A seedling-transfer device 15 is disposed above each planting devices 14.

A large number of square pole-shaped frame members are connected to each other with bolts to form the body 11. The ground-engaging wheel 12A and the rear wheel 13A are mounted on a right side member 11c of a horizontal part 11a. The ground-engaging wheel 12B and the rear wheel 13B are mounted on a left side member 11d of the horizontal part 11a. A vertical part 11b having an attachment portion to be attached to the tractor is mounted on a front member 11e. A supporting member 11g for supporting a reserve seedling stand is projected rearward from the upper end of the vertical part 11b. A receiving member 11j having a U-shaped groove at an end thereof is projected to the right-hand side and the left-hand side from each supporting member 11g to place a large number of reserve seedlings on the supporting member 11g. The receiving member 11j can be removed from the supporting member 11g by rotating the receiving member 11j. Thereby the planting devices 14 can be maintained efficiently.

A stool 11k is installed on a rear upper surface of the horizontal part 11a in a right-to-left sequent direction to allow an operator who performs a transplanting work to ride the transplanting machine 10. A safety fence 11m is erect on the rear end of the horizontal part 11a to prevent the operator from falling. No component parts are mounted on a rear member 11f of the horizontal part 11a to facilitate removal of the rearmember 11f from the horizontal part 11a. Thereby the planting device 14 and the seedling-transfer devices 15 can be maintained efficiently and mounted on the transplanting machine 10 and removed therefrom easily.

The planting devices 14 and the seedling-transfer devices 15 are disposed inside the frame of the horizontal part 11a of the body 11 by installing a front portion of each planting device 14 vertically movably at an upper or lower portion of the vertical part 11b via a parallel link 11n. The parallel link 11n is connected to one end 17a of a spring 17 of a lifting portion 16 mounted on the vertical part 11b of the body 11 to urge the parallel link 11n upward. By adjusting the urging extent of the parallel link 11n, the load of each planting device 14 is variably applied to the surface of an agricultural field.

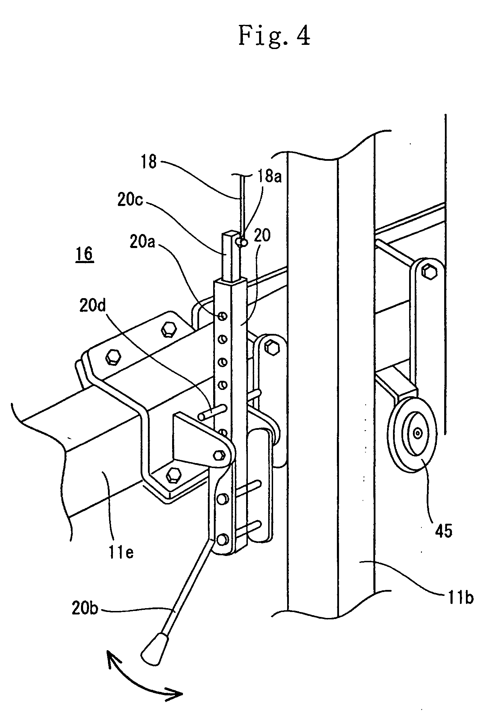

In the lifting portion 16, the other end 17b of the spring 17 is connected to a wire 18 wired from an upper portion of the lifting portion 16 toward a lower portion thereof via a pulley 19 provided at an upper end of the vertical part 11b of the lifting portion 16. As shown in Fig. 4, an end 18a of the wire 18 is connected to a center rod 20c of an adjusting rod 20 having a large number of positioning openings 20a formed therethrough. The adjusting rod 20 can be vertically moved by operating a lever 20b. By inserting a positioning pin 20d through the positioning opening 20a and fixing the center rod 20c to the adjusting rod 20 at a required position thereof, the length between the adjusting rod 20 and the spring 17 is varied to thereby adjust the urging extent of the spring 17. Thereby an optimum load to be applied to the field by the planting device 14 is secured in various conditions of the field.

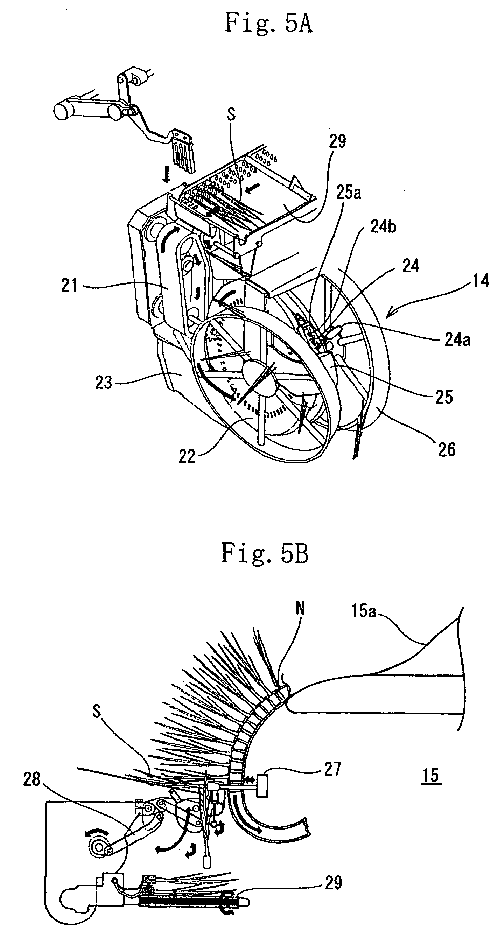

As shown in Fig. 5A, each planting device 14 includes a feeding belt 21 which receives seedlings S fed thereto horizontally by a conveyor belt 2 9 and dropped from the edge thereof and feeds the seedlings S vertically; a pair of planting disks 22 sandwiching the seedlings S disposed rearward from a grooved plate 23 therebetween and planting them on the field; and a pair of earthing disks 26 for earthing up the roots of the planted seedlings S. Between a pair of the earthing disks 26, an adjusting lever 24a is projected outward. An adjusting plate 24 having a large number of grooves 24b formed thereon is urged by a spring. A locking frame 25a is projected rearward from a supporting plate 25, U-shaped in a plan view, extended from an inner side surface of a pair of earthing disks 26. By operating the adjusting lever 24a vertically, the operator engages the locking frame 25a with the desired groove 24b to thereby allow the earthing disks 26 to adjust a planting depth.

As shown in Fig. 5B, each seedling-transfer device 15 includes a push rod 27 pushing the seedlings S out of a seedling box N moving on a seedling-placing stand 15a; a crank rod 28 for downwardly moving the seedlings S pushed out of the seedling box N; and the conveyor belt 29 for placing the seedlings S which has moved downward thereon and horizontally feeding the seedlings S.

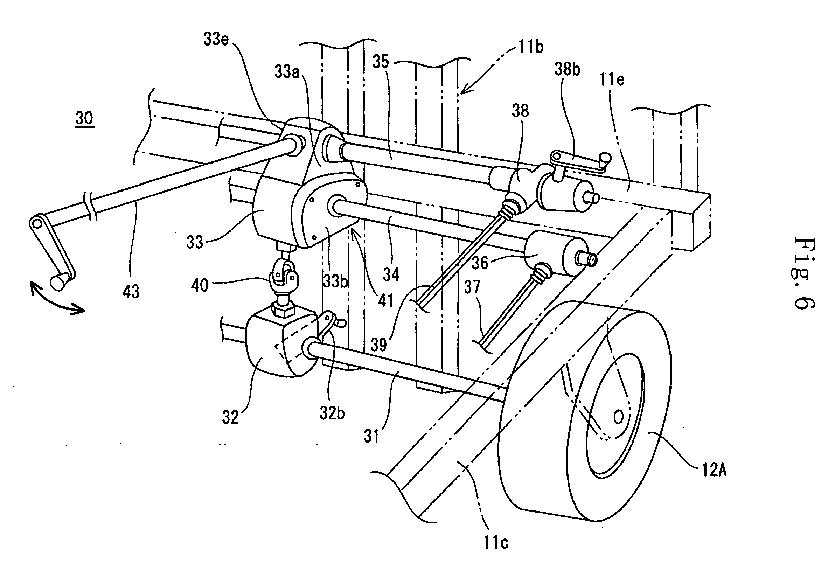

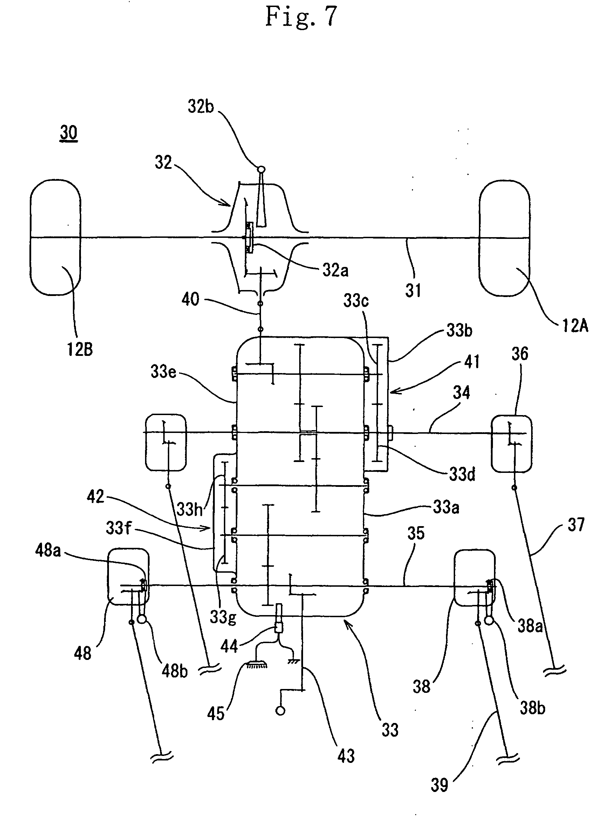

The seedling-planting devices 14 and the seedling-transfer devices 15 are driven by transmitting the power generated by the rotation of the ground-engaging wheels 12A and 12B to the planting devices 14 and the seedling-transfer devices 15 via a power transmission mechanism 30 shown in Figs. 6 and 7.

The power transmission mechanism 30 is described below with reference to the right half of the body 11. The power transmission mechanism 30 has a right axle 31 serving as the rotation shaft of the right ground-engaging wheel 12A; an input gearbox 32 serving as a power input portion for inputting the power of the right axle 31 thereto; a main gear box 33, disposed above the input gear box 32, serving as a power distribution portion; a right first output shaft 34 and a right second output shaft 35 projected to the right-hand side from a side surface of the main gear box 33 with the right first output shaft 34 disposed above the right second output shaft 35; a right lower gear box 36, connected with one end of the right first output shaft 34, which serves as a portion for transmitting a power transmitted from the right first output shaft 34 to the planting device 14; a shaft 37, for the planting device 14, extended rearward from the right lower gear box 36; a right upper gear box 38, connected with one end of the right second output shaft 35, which serves as a portion for transmitting a power transmitted from the right second output shaft 35 to the seedling-transfer device 15; and a shaft 39, for the seedling-transfer device 15, extending rearward from the right upper gear box 38.

The input gear box 32 converts the power of the right axle 31 from a horizontal direction to a vertical direction. A main clutch 32a is accommodated inside the input gear box 32 to transmit the power of the right axle 31 to the main gear box 33 or cut off the power of the right axle 31 by operating a main clutch lever 32b.

The main gear box 33 inputs the power of the right axle 31 converted by the input gear box 32 into the vertical direction from the horizontal direction via a universal joint 40 and distributes the inputted power to the planting device 14 and the seedling-transfer devices 15 as a force for driving them. That is, the main gear box 33 outputs the power to the planting device 14 through the right first output shaft 34 and to the seedling-transfer devices 15 through the right second output shaft 35.

A transmission ratio adjustment portion 41 is formed on a portion, of a right side surface 33a of the main gear box 33, at which a cover 33b is installed and from which the right first output shaft 34 is projected. The right side surface 33a of the main gear box 33 serves as the transmission channel for transmitting the power inputted thereto to the planting device 14. Various transmission ratios can be adjustably obtained by removing the cover 33b and replacing gears 33c and 33d having different number of teeth. In the first embodiment, five variable speeds can be selectively used. By adjusting the transmission ratio in this manner, the rotation ratio of the feeding belt 21 and the planting disk 22 of the planting device 14 can be appropriately adjusted for the rotation of the right and left ground-engaging wheels 12A and 12B.

A seedling feeding transmission ratio adjustment portion 42 is provided on a left side surface 33e, of the main gear box 33, serving as the transmission channel for transmitting the power inputted thereto to the seedling-transfer device 15. Various transmission ratios can be adjustably obtained by removing a left cover 33f and putting off gears 33g and 33h having different number of teeth. In the first embodiment, 40 variable speeds can be selectively used. By adjusting the transmission ratio in this manner, the interval between roots of the seedlings to be planted on the field can be appropriately set.

A manual rotation shaft 43 is connected to the main gear box 33. By rotating the manual rotation shaft 43 with the main gear box 33 being free, namely, with the transmission of the power of the right axle 31 to the main gear box 33 cut off by a main clutch 32a of the input gear box 32, the right first output shaft 34 and the right second output shaft 35 can be rotated. Thus the planting device 14 and the seedling-transfer devices 15 can be manually driven not in dependence on the rotation of the right ground-engaging wheel 12A.

Owing to the distribution of the power of the right ground-engaging wheel 12A performed in the above-described manner by the main gear box 33, the shaft 37 for each planting device 14 and the shaft 39 for each seedling-transfer device 15 are driven through the right first output shaft 34 and the right second output shaft 35 respectively. The shaft 37 for each planting device 14 is connected thereto to drive the feeding belt 21 and the planting disk 22. The shaft 39 for the seedling-transfer device 15 drives the push rod 27, the crank rod 28, and the conveyor belt 29.

An auxiliary clutch 38a is accommodated inside the right upper gear box 38, disposed at the right-hand end of the right second output shaft 35, from which the shaft 39 for seedling-transfer device 15 extends. By operating an auxiliary clutch lever 38b projected from the right upper gear box 38, the power of the right second output shaft 35 is transmitted to the shaft 39 for the seedling-transfer device 15 or is cut off. The shaft 39 for the seedling-transfer device 15 can be freely rotated, when the auxiliary clutch 38a is placed in a power cut-off state. Thereby it is possible to manually set the push rod 27, the crank rod 28, and the conveyor belt 29 to a predetermined position respectively. That is, a required phase in one drive cycle can be set for each seedling-transfer device 15. The above description has been made on the right half of the power transmission mechanism 30. The left half of the power transmission mechanism 30 and the right half thereof are symmetrical with respect to the center line of the body 11 and has an operation similar to that of the right half thereof.

Regarding an electric section of the transplanting machine 10, a rotation sensor 44 for detecting the number of rotations of the right second output shaft 35 is mounted on the main gear box 33. An electric power is supplied to the rotation sensor 44 from the traction tractor. The rotation sensor 44 is connected to an alarm 45 disposed on the vertical part 11b of the body 11. When the number of rotations of the right second output shaft 35 exceeds a predetermined number of rotations, the rotation sensor 44 detects it and the alarm 45 gives an alarm whistle. That is, when the traction speed is higher than the predetermined speed, the planting devices 14 and the seedling-transfer devices 15 are driven at a speed higher than the predetermined speed. Thus the seedlings cannot be transplanted reliably. The alarm whistle given by the alarm 45 informs a driver of the tractor that the traction speed is higher than the predetermined speed, thereby preventing a trouble from occurring in planting the seedlings.

The transplanting work to be performed by the transplanting machine 10 is described below.

Initially, the transplanting machine 10 is connected to the tractor via the vertical part 11b of the body 11 to allow the transplanting machine 10 to be connected then tracked by the tractor moreover. Then the operator visually checks the situation of the surface soil of the field on which the seedlings are to be planted and makes a trial travel to check the slip situation of the ground-engaging wheels 12A and 12B. Then the operator selects suitable gears from the gears 33c and 33d of the transmission ratio adjustment portion 41 of the main gear box 33 in dependence on the slip ratio of the ground-engaging wheels 12A and 12B and mount the selected gears 33c and 33d on the transmission ratio adjustment portion 41. Thereby the peripheral speed of the planting disk 22 of the planting device 14 becomes equal to the advance speed of the transplanting machine 10, and the peripheral speed of the planting disk 22 relative to the surface of the field is almost zero. The gears of the seedling feeding transmission ratio adjustment portion 42 of the main gear box 33 are replaced appropriately to set the interval between adjacent roots of the seedlings to a predetermined measure.

Thereafter the auxiliary clutch lever 38b of the right upper gear box 38 and an auxiliary clutch lever 48b of a left upper gear box 48 are operated to place the auxiliary clutch 38a and an auxiliary clutch 48a in a power cut-off state. In this state, the operator manually operates the push rods 27, the crank rods 28, and the conveyor belts 29 of the seedling-transfer devices 15 which feed four-row seedlings to set the phase in one drive cycle of the push rod 27 and the like of one seedling-transfer device 15 and the phase in one drive cycle of the push rod 27 and the like of the other seedling-transfer device 15 in such a way that the phases do not synchronize with each other.

When preparation for operating the transplanting machine 10 is completed as described above, a seedling box containing a large number of seedlings of onions or the like that have been grown is set on the seedling-placing stand 15a of each seedling-transfer device 15. Further the seedling box is set on the reserve seedling stand as well. After the main clutch lever 32b is operated to set the main clutch 32a to a cut-off state, the transplanting machine 10 is tracked by the tractor to dispose the transplanting machine 10 at an end of a ridge with the transplanting machine 10 parallel with ridge. In this state, the manual rotation shaft 43 is rotated to drive the planting device 14 and the seedling-transfer devices 15 and feed the seedlings to a position immediately before transplanting of the seedlings is started by the planting disk 22 of each of the planting device 14.

With the seedlings being manually fed, the main clutch lever 32b is connected to the main clutch 32a by operating the main clutch lever 32b to transmit the power. Thereby the tracking of the transplanting machine 10 is started by the tractor. By the tracking, the ground-engaging wheels 12A and 12B start to rotate. Simultaneously with the rotation of the ground-engaging wheels 12A and 12B, the planting apparatus 14 and the seedling-transfer device 15 are driven. Thereby the transplanting of the seedlings is started from the end of the ridge.

Thereafter the tractor tracks the transplanting machine 10 along the ridge. The slip of the ground-engaging wheels 12A and 12B on the surface soil of the field is compensated by the transmission ratio adjustment portion 41. Thus the seedlings are transplanted successively with high accuracy in four rows with the transplanted seedlings almost vertically kept. The phases of the drive cycles of the 4 ridges seedling-transfer devices 15 are so adjusted that the timing at which the load to be applied to one seedling-transfer device 15 becomes maximum in one drive cycle thereof does not synchronize the timing at which the load to be applied to the other seedling-transfer device 15 becomes maximum in one drive cycle thereof. Therefore the load is dispersedly applied to the ground-engaging wheels 12A and 12B that drive the planting device 14 and the seedling-transfer device 15. Thereby the ground-engaging wheels 12A and 12B rotate smoothly, thus driving the planting device 14 and the seedling-transfer device 15 reliably.

When the seedlings are planted to the end of the ridge, the main clutch lever 32b is operated to set the main clutch 32a to a cut-off state. Thereby the driving of the planting device 14 and that of the seedling-transfer device 15 are suspended. Then the advance direction of the transplanting machine 10 is changed to move to the adjacent ridge. Thereafter the planting work continues in a manner similar to the above-described manner. In this way, the transplanting of the seedlings on the entire field is completed.

The mode of the transplanting machine 10 of the present invention is not limited to the above-describedone. For example, instead of providing all of the transmission ratio adjustment portion 41, the main clutch 32a, the manual rotation shaft 43, and the auxiliary clutch 38a, they may be selectively provided in dependence on the content of a transplanting work. The number of the planting device 14 and that of the seedling-transfer devices 15 can be altered in dependence on the situation of the transplanting work. The mode of the body 11 can be altered in dependence on the situation of the transplanting work.

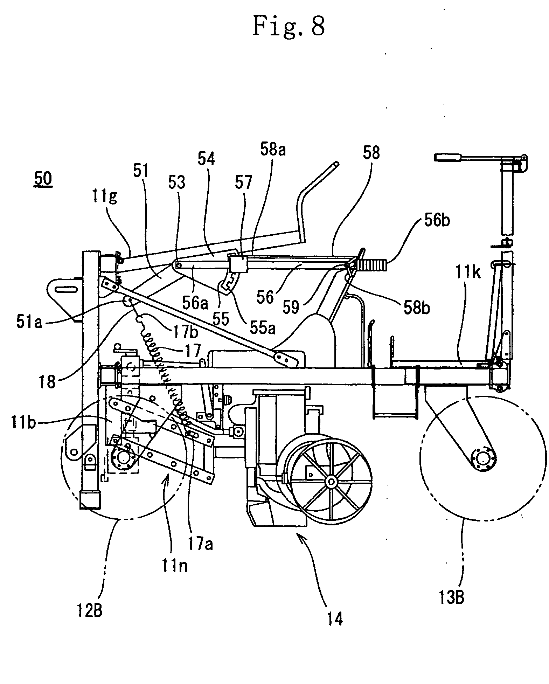

Figs. 8 through 11 show a second embodiment.

In a transplanting machine 50 of the second embodiment, the planting device 14 can be easily moved upward and downward by operating a handle 56.

As shown in Fig. 8, a front part of each planting device 14 is mounted vertically movably on a lower portion of the vertical part 11b of the body 11 via the parallel link 11n. A lower end 17a of the spring 17 is connected to the parallel link 11n. An upper end 17b of the spring 17 is mounted on an end 51a of a pivotal lever 51, which will be described later, via the wire 18 to urge the parallel link 11n upward.

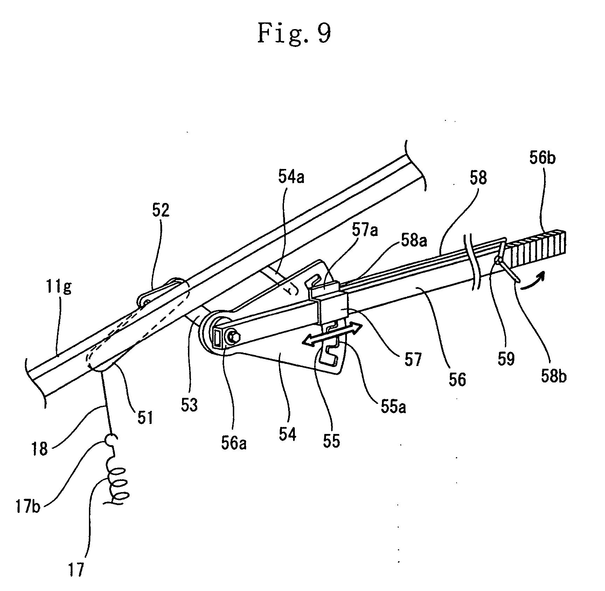

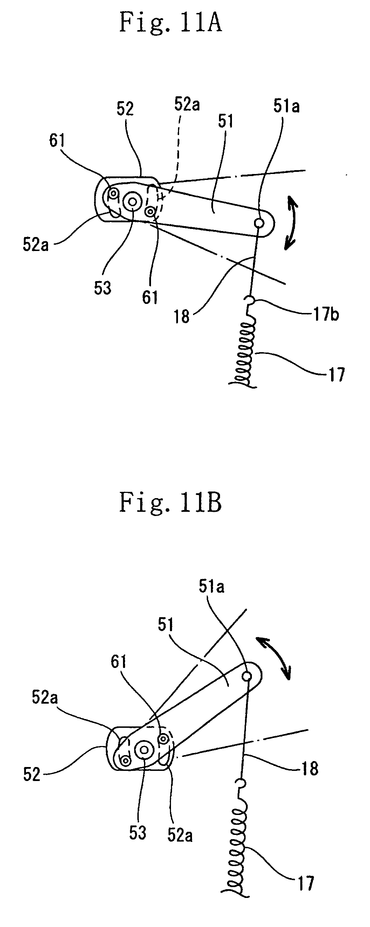

As shown in Figs. 9 and 11A, one end of a supporting shaft 53 is fixedly connected to a rear end of the pivotal lever 51 via an adjusting plate 52. A circular-arc-shaped slot 52a is formed on the adjusting plate 52 at both sides of a portion thereof at which the supporting shaft 53 is fixed to the adjusting plate 52. An adjusting bolt 61 inserted through the long slot 52a and the pivotal lever 51 are gastened together.

As shown in Fig. 9, a leading end 56a of a square pole-shaped handle 56 is fixedly connected to the other end of the supporting shaft 53 via a multi-stage locking means 54. A gripping portion 56b of the handle 56 at the rear end thereof is extended toward the stool 11k.

The fan-shaped multi-stage locking means 54 has a slide opening 55 formed in the vicinity of the circular arc with the slide opening 55 disposed along the circular arc. Five to-be-locked grooves 55a are formed at regular intervals on the slide hole 55. The multi-stage locking means 54 is fixed to the supporting member 11g with a fixing rod 54a. The to-be-locked grooves 55a are hook-shaped to prevent removal of a locking pin 57b.

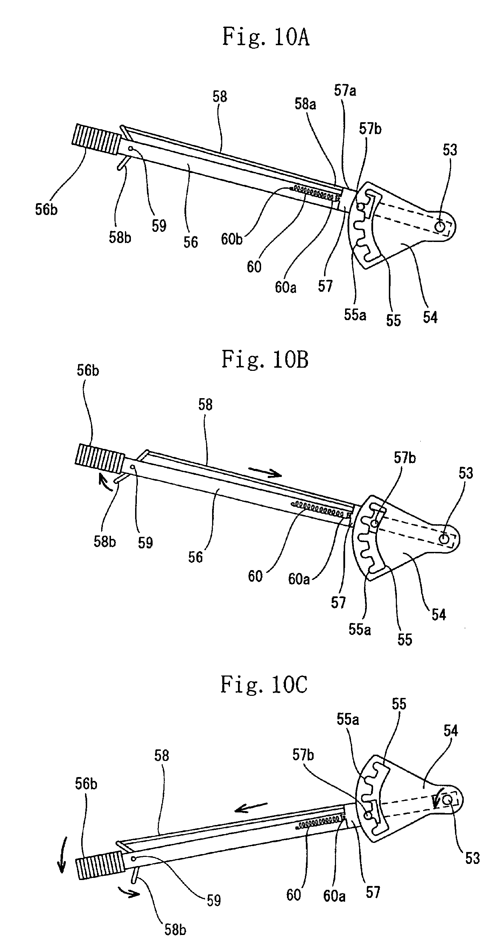

As shown in Figs. 9 and 10, a slide frame 57 having the locking pin 57b projected therefrom is fitted on the handle 56. Further, one end 60a of the spring 60 whose other end 60b is fixed to the handle 56 is fixed to the slide frame 57. Thereby the spring 60 is urged to fit the locking pin 57b into one of the to-be-locked grooves 55a.

A leading end 58a of the push rod 58 parallel with the handle 56 is connected to a flange portion 57a of the slide frame 57. At the rear end of the push rod 58, a V-shaped lever 58b is installed pivotally on a shaft 59.

The operation of moving the planting device 14 upward and downward by operating the handle 56 is described below.

When the operator on the stool 11k pulls the lever portion 58b toward her/him, as shown in Fig. 10B, the push rod 58 pivots forward around the shaft 59. Consequently the slide frame 57 slides forward against the urging force of the spring 60.

The locking pin 57b of the slide frame 57 is unlocked from the to-be-locked groove 55a by the above-described operation. Then the operator tilts the handle 56 downward by holding the gripping portion 56b thereof, as shown in Fig. 10C. Thereby the supporting shaft 53 rotates. When the operator releases the lever 58b, the spring 60 contracts. Thereby locking pin 57b is locked to the to-be-locked groove 55a disposed at a different stage.

As shown in Fig. 11A, the rotation of the supporting shaft 53 causes the pivotal lever 51 and the adjusting plate 52 to pivot. Thereby upper end 17b of the spring 17 is lifted through the wire 18 fixed to the end 51a of the pivotal lever 51. As a result, the planting device 14 moves upward via the parallel link 11n connected to the lower end 17a of the spring 17.

To move the planting device 14 downward, needless to say, the handle 56 should be tilted upward by performing a procedure reverse to the above-described one.

The pivotal range of the pivotal lever 51 is determined by the vertical length of the slide opening 55 of the multi-stage locking means 54. As shown in Fig. 11B, the adjusting bolt 61 is slid inside the long slot 52a of the adjusting plate 52 fixed to the supporting shaft 53 to pivot the pivotal lever 51 with respect to the adjusting plate 52. In this state, the adjusting bolt 61 is fastened to thereby regulate the inclined angle of the pivotal lever 51 more successfully.

That is, the vertical position of the pivotal lever 51 can be also adjusted by means of the adjusting bolt 61. Thereby the pivotal range of the pivotal lever 51 can be increased to a range obtained by synthesizing the pivotal ranges shown with the one-dot chains line of Figs. 11A and 11B.

In the above-described construction, by operating the gripping portion 56b of the handle 56 vertically, the operator can adjust the vertical position of the planting device 14 easily. Further the operator can operate the handle 56, while the operator is watching the planting state from the stool 11k.

Accordingly in dependence on the situation of the surface soil, namely, in dependence on the height and degree of irregularity of the surface of the soil on which seedlings are planted, it is possible to stabilize the load to be applied to the earth by the planting device 14.

The length of the handle 56 is much larger than that of the pivotal lever 51. Therefore owing to the principle of the lever having a large ratio of the length of the pivotal lever 51 to that of the handle 56, it is possible to generate a large load for lifting the planting device 14.

The means for lifting the planting device 14 is constructed not of a hydraulic construction or a motor, but of a mechanical construction. Therefore it is possible to manufacture the transplanting machine at a low cost and make it lightweight.

By adjusting the adjusting bolt 61 inserted through the long slot 52a of the adjusting plate 52, it is possible to enlarge the pivotal range of the pivotal lever 51 which is determined by the vertical length of the slide opening 54 of the multi-stage locking means 54. Thus the transplanting machine is capable of coping with a large difference in the height of the surface soil between a flat soil and a furrowed soil.

### INDUSTRIAL APPLICABILITY

As apparent from the foregoing description, according to the transplanting machine of the present invention, by rotating the manual rotation shaft with the main clutch placed in the cut-off state, the seedling-planting devices and the seedling-transfer devices can be manually driven. Thereby the transplanting machine is capable of planting seedlings over the full length of each ridge. That is, since the seedlings are transplanted by effectively using the area of the ridges and that of the agricultural field, it is possible to increase the yield. The transplanting machine has the transmission ratio adjustment portion. Thus even though the degree of a slip of the ground-engaging wheels varies in dependence on the condition of the surface soil of the field, namely, regardless of whether the surface soil of the field is dry or muddy, a slip amount is compensated because the slip amount is absorbed by the transmission ratio adjustment portion. Thus the speed of the planting disk of the planting device with respect to the surface of the field can be set to zero. Thereby the transplanting machine is capable of planting the seedlings reliably and accurately.

Further by placing the auxiliary clutch in the power cut-off state, it is possible to manually set the phases in one drive cycle of a plurality of the seedling-transfer device as desired. Therefore when a plurality of seedling-transfer devices is mounted on the body of the transplanting machine, the load is dispersedly applied to the ground-engaging wheels that drive the seedling-planting devices and the seedling-transfer devices by shifting the phase in one drive cycle of one seedling-transfer device from the phase in one drive cycle of theotherseedling-transferdevice. Thereby the ground-engaging wheels rotate smoothly, thus allowing a stable drive situation and a stable seedling operation to continue.

By merely moving the gripping portion with the operator holding it, the leading end of the pivotal lever pivots vertically on the supporting shaft. The operator can adjust the vertical position of the transplanting apparatus easily through the spring mounted on the leading end of the pivotal lever. Accordingly it is possible to adjust the load to be applied to the soil by the transplanting apparatus by operating the handle in dependence on the situation of the surface of the soil, namely, in dependence on the height and degree of irregularity of the surface of the soil on which seedlings are planted.

Moreover the length of the handle is much larger than that of the pivotal lever, it is possible to generate a large load for lifting the transplanting apparatus. Further the means for lifting the transplanting apparatus is constructed not of a hydraulic construction or a motor, but of the mechanical construction. Therefore it is possible to manufacture the transplanting machine at a low cost and make it lightweight.

## Claims

1. A transplanting machine for transplanting an agricultural field with seedlings by driving a seedling planting device and a seedling-transfer device thereof to which a power generated by a rotation of ground-engaging wheels thereof is transmitted via a power transmission mechanism, comprising:
a transmission ratio adjustment portion provided in a transmission channel, of said power transmission mechanism, for transmitting said power from said ground-engaging wheels to said seedling-planting device,
wherein said transmission ratio adjustment portion correctively adjusts a slip of said ground-engaging wheels with respect to said field to drive said seedling-planting device.

2. A transplanting machine for transplanting an agricultural field with seedlings by driving a seedling-planting device and a seedling-transfer device thereof to which a power generated by a rotation of ground-engaging wheels thereof is transmitted via a power transmission mechanism, comprising:
a main clutch, for transmitting and cutting off said power generated by said ground-engaging wheels, installed in a power input portion included in said power transmission mechanism to input said power thereto; and
a manual rotation shaft installed on a power distribution portion, of said power transmission mechanism, for distributing said power to said seedling-planting device and said seedling-transfer device,
wherein by rotating said manual rotation shaft with said power cut off by said main clutch, said seedling-planting device and said seedling-transfer device can be driven manually.

3. A transplanting machine for transplanting an agricultural field with seedlings by driving a plurality of seedling-planting devices and seedling-transfer devices thereof, provided on a body of said transplanting machine, to which a power generated by a rotation of ground-engaging wheels thereof is transmitted via a power transmission mechanism, comprising:
an auxiliary clutch, for transmitting and cutting off said power, installed in each transmission portion included in said power transmission mechanism to transmit said power to each of said seedling-transfer devices,
wherein with any of said auxiliary clutches or all of said auxiliary clutches placed in a cut-off state, the phase of a driving situation of one of said seedling-transfer devices to which transmission of said power has been cut off is so set that said phase shifts from phases of driving situations of others of said seedling-transfer devices, whereby a load to be applied to said ground-engaging wheels is averaged.

4. A transplanting machine for transplanting an agricultural field with seedlings by driving a seedling-planting device and a seedling-transfer device thereof to which a power generated by a rotation of ground-engaging wheels thereof is transmitted via a power transmission mechanism,
wherein said seedling-planting device is lifted via a spring fixed to a leading end of a pivotal lever;
one end of a handle longer than said pivotal lever is fixed to a supporting shaft, fixed to said pivotal lever, serving as a support of a pivotal motion of said pivotal lever; and the other end of said handle is formed as a gripping portion to be operated; and
said leading end of said pivotal lever can be pivoted vertically by performing an operation of vertically tilting said gripping portion of said handle; and said pivotal lever is placed in position by locking said handle to a multi-stage locking means fixed to a body of said transplanting machine.
